# EUROPÄISCHE PATENTSCHRIFT

(11) **EP 3 361 114 B1**
(45) Veröffentlichungstag und Bekanntmachung des Hinweises auf die Patenterteilung: **22.05.2019**
(21) Anmeldenummer: 18150808.6
(22) Anmeldetag: 09.01.2018
(51) Int. Cl.: F16D 43/20, B25B 23/14, B25B 23/142, F16D 7/04, F16D 7/02

(54) **DREHMOMENTABHÄNGIG AUSLÖSBARE KUPPLUNG FÜR EIN HANDWERKZEUG**
TORQUE-DEPENDENT RELEASABLE COUPLING FOR A HAND TOOL
COUPLAGE POUVANT ÊTRE DÉCLENCHÉ FONCTIONNANT SUIVANT UN COUPLE DE ROTATION POUR UN OUTIL À MAIN

(30) Priorität: 08.02.2017 DE 102017102497
(43) Veröffentlichungstag der Anmeldung: 15.08.2018
(73) Patentinhaber: C. & E. Fein GmbH, 73529 Schwäbisch Gmünd-Bargau (DE)
(72) Erfinder: Walz, Frank, 73540 Heubach (DE)
(74) Vertreter: Roos, Michael

(56) Entgegenhaltungen:
- EP-A1- 0 351 179
- EP-A1- 1 623 797
- EP-A2- 2 184 138
- DE-A1-102004 058 807
- DE-A1-102009 027 951

## Beschreibung

Die Erfindung betrifft eine drehmomentabhängig auslösbare Kupplung für ein Handwerkzeug, mit einem ersten Kupplungselement, das mit einem zweiten Kupplungselement zur Übertragung eines Drehmoments zusammenwirkt, wobei mindestens eines der beiden Kupplungselemente gegenüber dem anderen Kupplungselement beweglich ist und durch ein Federelement vorgespannt ist.

Derartige drehmomentabhängig auslösbare Kupplungen sind seit langem im Stand der Technik durch Benutzung bekannt und werden insbesondere für Schrauber mit einem einstellbaren Abschaltelement verwendet.

Aus der DE 10 2009 027 951 A1 ist eine Kupplung für einen Bohrschrauber bekannt, die drehmomentabhängig auslösbar ist. Um dabei das Drehmoment in einem großen Bereich verstellen zu können, werden bei der DE 10 2009 027 951 A1 zwei axial gestaffelte Tellerfedern verwendet, die unterschiedliche Federkennlinien aufweisen, wodurch ein nichtlinearer Kupplungskraftverlauf der Drehmomentbegrenzungseinheit erzielt wird.

Bei der DE 10 2004 058 807 A1 wird eine Federanordnung einer drehmomentabhängig auslösbaren Kupplung verwendet, bei der unterschiedlich wirkende Federelemente miteinander kombiniert werden, um in einfacher Weise ein maximales Drehmoment in einem Bereich kleiner Drehmomente sehr präzise und zusätzlich über einen weiten Drehmomentbereich einzustellen.

Die aus der EP 2 184 138 A2 bekannte Feder ist eine Tellerfeder, die einen nicht linearen, progressiven Verlauf der Federkennlinien aufweist.

Die Kupplung, die aus der EP 0 351 179 A1 bekannt ist, weist zwei unterschiedliche Federn auf, um in Kombination miteinander eine nichtlineare Federkennlinie zu erreichen. Die Federn sind dabei konzentrisch zueinander angeordnet.

In der Regel handelt es sich hierbei um Kugel-Rutschkupplungen mit zwei Kupplungsscheiben, die über mindestens eine Kugel formschlüssig gekoppelt sind, so dass ein Drehmoment zwischen den beiden Kupplungsscheiben übertragen werden kann.

Beide Kupplungsscheiben sind hierbei durch eine definierte Vorspannkraft mit senkrechter Wirkrichtung in Ruhelage zusammengedrückt.

Mindestens eine Kupplungsscheibe weist hierbei als Formschlusselement je ein Nockenelement pro Kugel auf.

Erreicht das Drehmoment einen gewissen Wert, so beginnt die Kugel durch die auf sie wirkende Umfangskraft an dem Nockenelement mit einer Steigung, die kleiner als 90° ist (bezogen auf die Richtung der Umfangskraft) hochzulaufen. Die Nocke, an der die Kugel läuft, ist dabei so gestaltet, dass die Tangentensteigung der Kugellaufbahn ab einem Punkt oberhalb der Ruhelage stetig abnehmend ist. Dies hat zur Folge, dass die zum Weiterfördern der Kugel benötigte Umfangskraft kontinuierlich kleiner wird. Die Kupplung löst somit bei Überschreiten eines gewissen Drehmoments aus oder "öffnet". Das zum weiteren Öffnen der Kupplung benötigte Drehmoment wird durch die Bauform der Nocke kontinuierlich kleiner und nähert sich bei reiner Rollreibung durch die Kugel irgendwann dem Wert 0 an (d.h. Kugellaufbahn parallel zur Richtung der Umfangskraft).

Je größer die Vorspannkraft ist, desto größer wird auch das benötigte Drehmoment zum Öffnen der Kupplung.

Wird die Vorspannkraft gemäß dem Stand der Technik durch eine Druckfeder mit linearer Kennlinie erzeugt, so nimmt die Vorspannkraft proportional zur Öffnungsbreite der Kupplung zu. Bei einer kontinuierlichen Nockensteigung würde das zum weiteren Öffnen der Kupplung benötigte Drehmoment somit ebenfalls proportional ansteigen.

Durch eine geeignete Kombination der Federkennlinie und einer stetig flacher werdenden Nockenkontur kann erreicht werden, dass mit zunehmendem Öffnungsweg der Kupplung das benötigte Drehmoment zum Weiterdrehen ab einem bestimmten Punkt nicht mehr zunimmt oder sogar stetig fallend ist.

Je nachdem, welche Federkennlinie und Tangentensteigung einer Nocke vorliegen, kann erreicht werden, dass das maximal benötigte Öffnungsmoment zu dem Zeitpunkt erreicht ist, an dem die Kugel beginnt, an der Nocke hochzulaufen, oder dass das Moment zunächst weiter zunimmt und erst ab einem bestimmten Öffnungsweg abnimmt.

Im Sinne einer wiederholgenauen Funktion der Kupplung, also einem definierten Öffnungselement, wird angestrebt, dass das maximale Drehmoment nur in dem Momentzu dem Zeitpunkt anliegt, in dem die Kupplung sich zu öffnen beginnt.

Auf diese Weise kann z.B. bei einem Einsatz in einem Schrauber verhindert werden, dass eine auf ein bestimmtes Drehmoment anzuziehende Verschraubung zu stark angezogen wird bzw. beim Öffnen der Kupplung zusätzlich nachgezogen wird.

Um ein solches, oben beschriebenes Betriebsverhalten der Kupplung möglichst sicher gewährleisten zu können, sollte die momentan anliegende Vorspannkraft der beiden Kupplungsscheiben beim Öffnen idealerweise nicht oder nur in sehr geringem Maße zunehmen. Dies kann z.B. durch eine sehr flache Kraft-Weg-Kennlinie der Feder erreicht werden.

Ist die Kraft-Weg-Kennlinie zu steil, so tritt der oben beschriebene nachteilige Effekt auf, dass das maximale Drehmoment erst nach einem bestimmten Öffnungsweg erreicht wird.

In der Praxis macht sich dieses Prinzip bei einem Schrauber wie folgt bemerkbar:

Das kleinste Drehmoment, bei dem das oben beschriebene, angestrebte Betriebsverhalten noch gewährleistet ist, hängt bei einer vorgegebenen Nockenkontur allein von der Vorspannkraft und deren Zunahme während des Öffnens ab. Wird die Vorspannkraft z.B. durch eine Druckfeder aus Stahl erzeugt, so ist die Kraft-Weg-Kennlinie der Feder mitentscheidend für das kleinste sichere Auslösemoment der Kupplung.

Andererseits wird durch die Kraft-Weg-Kennlinie und die maximale Federlänge das maximal erzielbare Drehmoment limitiert.

Dies bedeutet, je flacher die Kraft-Weg-Kennlinie ist, desto kleiner wird zwar das Minimalmoment, bei dem noch eine sichere Auslösung gewährleistet ist. Allerdings schrumpft das nutzbare Drehmoment ebenfalls zusammen, weil durch die endliche Länge der Feder das maximale Moment begrenzt wird.

Vor diesem Hintergrund liegt der Erfindung die Aufgabe zugrunde, eine drehmomentabhängig auslösbare Kupplung für ein Handwerkzeug gemäß der eingangs genannten Art derart zu verbessern, dass eine sichere und präzise einstellbare Auslösung über einen möglichst großen Drehmomentbereich ermöglicht ist.

Diese Aufgabe wird bei einer drehmomentabhängig auslösbaren Kupplung gemäß der eingangs genannten Art erfindungsgemäß durch die Merkmale des kennzeichnenden Teils des Anspruchs 1 gelöst.

Die Aufgabe wird auf diese Weise gelöst.

Indem eine nicht-lineare Kraft-Weg-Kennlinie für das Federelement verwendet wird, kann ein größerer Bereich für die erzielbare Vorspannkraft genutzt werden als bei Verwendung eines Federelements mit einer linearen Kraft-Weg-Kennlinie gemäß dem Stand der Technik.

Somit kann das Auslösemoment der Kupplung bei einer vorgegebenen Baugröße über einen größeren Drehmomentbereich variiert werden.

Vorzugsweise weist hierzu das Federelement eine progressive Kraft-Weg-Kennlinie auf.

Dies bedeutet, dass die Vorspannkraft der Feder mit zunehmendem Federweg stärker ansteigt als dies bei einer linearen Kennlinie der Fall wäre. Auf diese Weise wird sichergestellt, dass das Federelement ein relativ kleines minimales Auslösemoment der Kupplung ermöglicht und andererseits ein großes Auslösemoment, wenn dies gewünscht ist.

Gemäß einem weiteren Merkmal der Erfindung ist das Federelement eine Druckfeder, insbesondere eine Schraubenfeder, bei welcher der Windungsdurchmesser über die Länge und/oder der Drahtdurchmesser über die Länge und/oder die Windungssteigung über die Länge variiert ist.

Dies sind verschiedene grundsätzlich bekannte Möglichkeiten, um eine Feder mit progressiver Kraft-Weg-Kennlinie bereitzustellen. Selbstverständlich können hierbei auch mehrere der genannten Parameter miteinander kombiniert werden, so dass sich die erzielten einzelnen Progressionseffekte konstruktiv überlagern und verstärken.

Bevorzugt ist das Federelement als rotationssymmetrische Druckfeder mit variabler Steigung und/oder variablem Windungsdurchmesser ausgebildet.

Auf diese Weise lässt sich bei unveränderter Ausgestaltung der Kupplungselemente eine sichere Auslösung der Kupplung über einen größeren Drehmomentbereich gewährleisten, ohne dass hierzu ein nennenswerter Mehraufwand bei der Fertigung oder Montage der Komponenten entsteht.

Ein weiterer Vorteil der Verwendung eines Federelements mit progressiver Kraft-Weg-Kennlinie ergibt sich dann, wenn die Einstellung der Kupplung auf ein bestimmtes Drehmoment in fest vorgegebenen Wegschritten erfolgt: Durch die Wahl einer passenden, nicht-linearen Federkennlinie kann eine Änderung des Drehmoments pro Wegschritt sowohl dem unteren als auch im oberen Drehmomentbereich relativ gesehen angeglichen werden, was bei einer linearen Federkennlinie nicht möglich wäre.

Wird die Kupplung in einem Schrauber verwendet, so ergibt sich der Vorteil, dass die Einstellung des Auslösemoments über den gesamten Drehmomentbereich hinweg in etwa gleich feinfühlig vorgenommen werden kann.

Zusätzlich bietet eine progressive Federkennlinie im unteren Drehmomentbereich eine erhöhte Betriebssicherheit. Durch die niedrige Federrate in der Nähe der Auslenkung von null kann die Vorspannkraft für das Minimalmoment über einen relativ großen Weg aufgebaut werden, wodurch Längentoleranzen des Federelements unkritisch werden. Die Kupplung kann also - sofern ein Endanschlag vorhanden ist - bei richtiger Auslegung der Federkennlinie nie so weit entspannt werden, dass die Vorspannkraft null wird bzw. die Kupplung mangels ausreichender Vorspannung auseinanderfällt.

Die Kupplung ist grundsätzlich als Reibkupplung, insbesondere Scheibenkupplung oder Kegelkupplung, verwendbar.

Gemäß einer bevorzugten Ausführungsform, die insbesondere bei Schraubern zur Anwendung kommt, ist die Kupplung als Rollkörper-Rutschkupplung ausgebildet, bei der die beiden Kupplungselemente mittels mindestens eines Rollkörpers miteinander gekoppelt sind, der mit mindestens einer Führungskurve an den beiden Kupplungselementen zusammenwirkt.

Auf diese Weise lässt sich eine praktisch verschleißfreie Kupplung mit einem definierten Auslösemoment erzielen, das über einen großen Bereich einstellbar ist.

Der mindestens eine Rollkörper ist gemäß einer weiteren Ausgestaltung der Erfindung als Kugel oder Rolle ausgebildet, wobei eine Ausgestaltung als Kugel besonders bevorzugt ist.

Gemäß einer weiteren Ausgestaltung der Erfindung ist die Führungskurve in Umfangsrichtung geschlossen und weist mindestens ein Nockenelement auf, das mit mindestens einem Rollkörper zusammenwirkt.

Gemäß einer weiteren Ausgestaltung der Erfindung sind Mittel zum Einstellen einer auf das Federelement wirkenden Vorspannkraft vorgesehen.

Somit kann das Auslösemoment der Kupplung über einen bestimmten Bereich eingestellt werden.

Die Aufgabe der Erfindung wird ferner durch ein Handwerkzeug, insbesondere ein Elektrohandwerkzeug, insbesondere einen Schrauber, mit einer Kupplung gemäß der vorstehend genannten Art gelöst.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine stark vereinfachte Seitenansicht eines erfindungsgemäßen Handwerkzeugs in Form eines Schraubers mit einer erfindungsgemäßen Kupplung;
- Fig. 2: eine vergrößerte Seitenansicht einer drehmomentabhängig auslösbaren Kupplung in Form einer Kugel-Rutschkupplung mit einem Federelement in Form einer Schraubenfeder;
- Fig. 3-5: Prinzipdarstellungen, welche die beiden miteinander zusammenwirkenden Kupplungselemente mit einer Kugel, die an einem Nockenelement hochläuft, in verschiedenen Phasen zeigen, wobei Fig. 3 eine geschlossene Kupplung zeigt, Fig. 4 den Öffnungsbeginn der Kupplung zeigt und Fig. 5 die vollständige Auslösung der Kupplung zeigt;
- Fig. 6: ein zylindrisches Federelement mit progressiver Kennlinie mit variabler Windungssteigung;
- Fig. 7: ein tailliertes Federelement mit progressiver Kennlinie mit gleichbleibender Windungssteigung;
- Fig. 8: ein tailliertes Federelement mit variabler Windungssteigung mit stark progressiver Federkennlinie;
- Fig. 9: ein Diagramm, das die prozentuale Drehmomentzunahme pro Wegschritt bei einem Federelement mit linearer und bei einem Federelement mit nichtlinearer Kennlinie zeigt;
- Fig. 10: die schematische Darstellung eines Drehmomentverlaufs in der Kupplung gemäß Fig. 2 über dem Öffnungsweg bei einer großen Federrate und bei einer kleinen Federrate;
- Fig. 11: eine schematische Darstellung des Auslösemomentes der Kupplung gemäß Fig. 2 in Abhängigkeit vom Federweg für den Fall eines nichtlinearen Federelementes mit stetig zunehmender (progressiver) Kennlinie, sowie für ein Federelement mit einer steilen, linearen Kraft-Weg-Kennlinie und für ein Federelement mit einer flachen, linearen Kraft-Weg-Kennlinie.

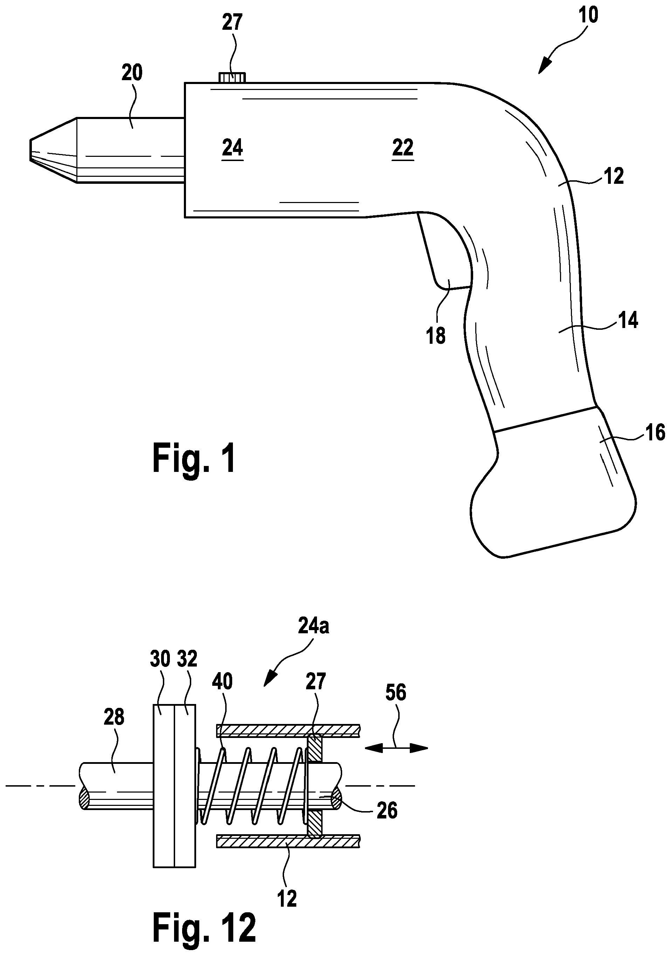

In Fig. 1 ist ein erfindungsgemäßes Handwerkzeug in Form eines Schraubers stark vereinfacht in der Seitenansicht dargestellt und insgesamt mit der Ziffer 10 bezeichnet.

Das Handwerkzeug 10 weist ein Gehäuse 12 mit einem pistolenförmigen Handgriff 14 auf, an dessen unterem Ende ein Akkupack 16 abnehmbar vorgesehen ist. Zum Einschalten des Schraubers ist ein Schalter 18 in Form eines Pistolendrückers am Handgriff 14 vorgesehen. Im Gehäuse 12 ist ferner ein Antrieb mit einem Elektromotor und einem Getriebe, beispielsweise in Form eines Planetenradgetriebes, mit der Ziffer 22 angedeutet. Der Antrieb 22 treibt eine drehmomentabhängig auslösbare Kupplung 24 an, deren Ausgang eine Werkzeugaufnahme 20 in Form eines Bithalters antreibt. Das Auslösemoment der Kupplung 24 kann mittels einer Stelleinrichtung 27 eingestellt werden.

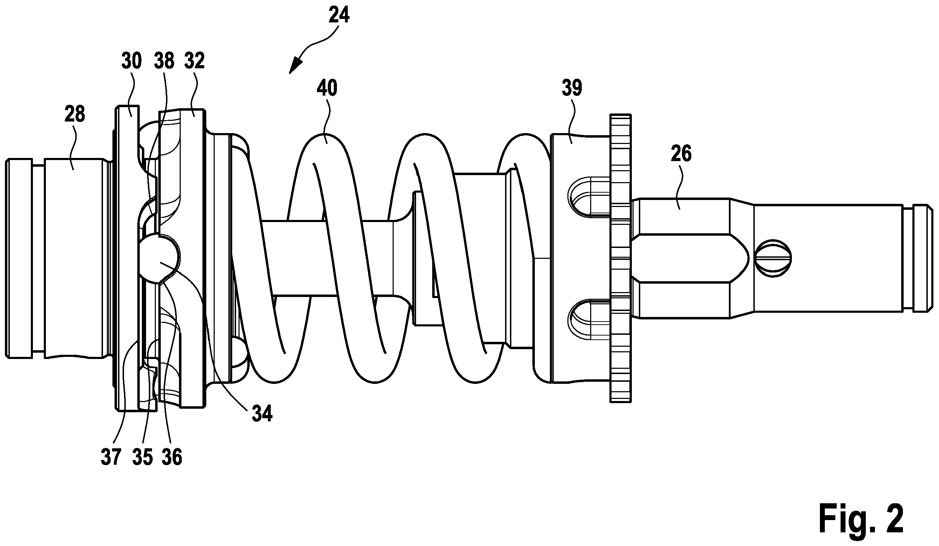

Fig. 2 zeigt den grundsätzlichen Aufbau einer drehmomentabhängig auslösbaren Kupplung 24, die in dem Handwerkzeug 10 verwendet werden kann.

Die Kupplung 24 ist als Kugel-Rutschkupplung ausgebildet und weist ein erstes Kupplungselement 30 auf, das mit einem zweiten Kupplungselement 32 zusammenwirkt. Das erste Kupplungselement 30 wird von einer Antriebswelle 28 angetrieben. Das zweite Kupplungselement 32 wirkt mit einer Abtriebswelle 26 zusammen. Auf der Abtriebswelle 26 ist ein Flansch 39 vorgesehen, an dem sich ein Federelement 40 in Form einer Schraubenfeder abstützt, mittels dessen das zweite Kupplungselement 32 in Richtung auf das erste Kupplungselement 30 vorgespannt ist. Das zweite Kupplungselement 32 ist gegen die Wirkung der Spannung des Federelementes 40 an einem Schaft 29 der Abtriebswelle 26 drehfest, aber in Axialrichtung verschiebbar aufgenommen.

Am zweiten Kupplungselement 32 ist eine in Umfangsrichtung verlaufende Führungskurve 35 mit einer Mehrzahl von Ausnehmungen 36 zur Aufnahme von Rollkörpern 34 in Form von Kugeln vorgesehen. Im vorliegenden Fall sind vier Rollkörper 34 und demgemäß auch vier zugeordnete Ausnehmungen 36 an der Führungskurve 35 vorgesehen. Am ersten Kupplungselement 30 ist eine in Umfangsrichtung verlaufende Führungskurve 37 vorgesehen, wobei jedem Rollkörper 34 ein Nockenelement 38 zugeordnet ist.

Mittels der Ausnehmungen 36 am zweiten Kupplungselement 32, den Rollkörpern 34 und den zugeordneten Nockenelementen 38 ergibt sich im Normalfall eine formschlüssige Drehmomentübertragung von der Antriebswelle 28 über das erste Kupplungselement 30 auf das zweite Kupplungselement 32 und damit auf die Abtriebswelle 26.

Das zweite Kupplungselement 32 ist durch die Vorspannkraft des Federelementes 40 gegenüber dem ersten Kupplungselement 30 verspannt.

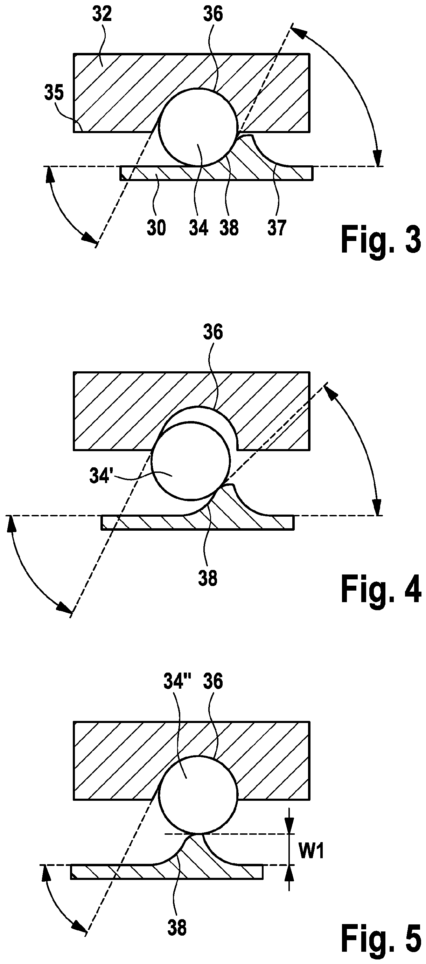

Nachfolgend wird anhand der Fig. 3 bis 5 eine drehmomentabhängige Auslösung der Kupplung 24 näher erläutert.

Fig. 3 zeigt die formschlüssige Drehmomentübertragung vom ersten Kupplungselement 30 auf das zweite Kupplungselement 32. Der Rollkörper 34 in Form der Kugel ist innerhalb einer zugeordneten Ausnehmung 36 an der Führungskurve 35 aufgenommen und liegt an der Flanke eines zugeordneten Nockenelementes 38 an der Führungskurve 37 des ersten Kupplungselementes 30 an. Es ergibt sich somit eine formschlüssige Drehmomentübertragung.

Fig. 4 zeigt die Kupplung 24 in halb geöffnetem Zustand. Dies bedeutet, das Drehmoment ist derart angestiegen, dass die Vorspannkraft des Federelementes 40 überwunden wurde und sich der Rollkörper in die dargestellte Lage 34' bewegt hat. In diesem Fall sind eine Rollreibung und eine Gleitreibung vorhanden.

Fig. 5 zeigt die vollständig geöffnete Kupplung. Hierbei ist das Drehmoment so weit angestiegen, dass der Rollkörper 34" den Scheitel des Nockenelementes 38 erreicht hat und die Kupplung nunmehr vollständig geöffnet ist. Der Rollkörper 34" ist in die Ausnehmung 36 zurückgelaufen, da die senkrechte Kraftkomponente größer wird als die Horizontale. W1 zeigt den maximalen Öffnungsweg in Axialrichtung, der sich für die Kupplung 24 ergibt.

Erfindungsgemäß wird ein Federelement 40 mit einer nicht-linearen Kraft-Weg-Kennlinie, vorzugsweise ein Federelement 40 mit progressiver Kraft-Weg-Kennlinie verwendet.

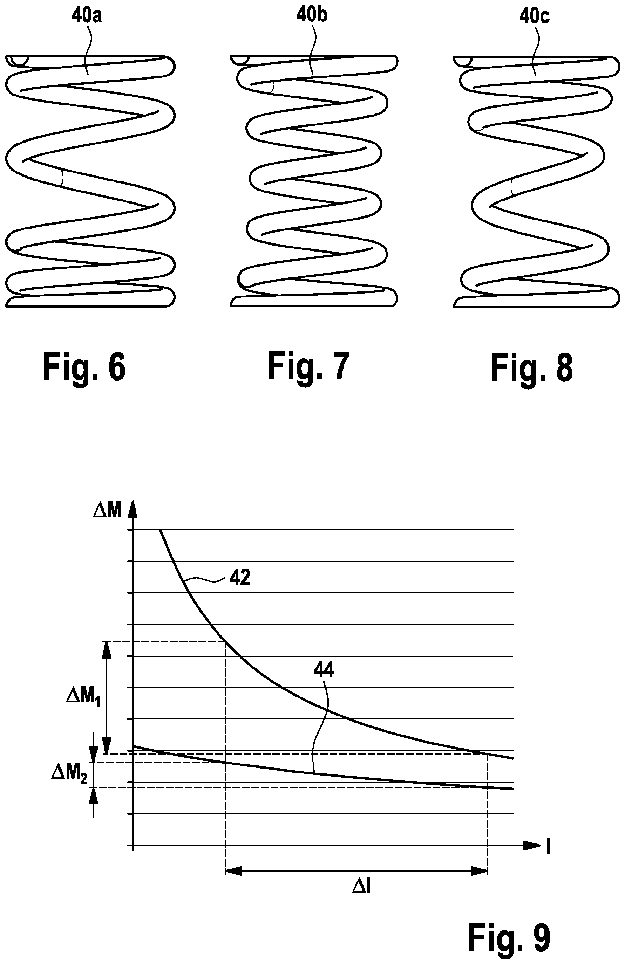

In den Fig. 6 bis 8 sind drei Varianten für ein solches Federelement mit progressiver Kennlinie dargestellt.

Fig. 6 zeigt ein Federelement 40a in Form einer zylindrischen Feder mit variabler Windungssteigung.

Fig. 7 zeigt ein Federelement 40b in Form einer taillierten Feder mit gleichbleibender Windungssteigung.

Fig. 8 zeigt ein Federelement 40c in Form einer taillierten Feder mit variabler Windungssteigung. Hierbei ergibt sich eine stark progressive Kennlinie infolge einer konstruktiven Interferenz von Taillierung und variabler Steigung.

In Fig. 9 zeigt die prozentuale Drehmomentzunahme ΔM in Abhängigkeit vom Federweg I.

Die Kennlinie 42 zeigt die relative Drehmomentänderung pro Wegschritt für ein lineares Federelement. Die Kurve 44 zeigt die relative Drehmomentänderung pro Wegschritt für ein nicht-lineares Federelement mit progressiver Kennlinie.

Mit ΔI ist der Drehmoment-Einstellbereich angegeben.

Die zugeordnete relative Drehmomentänderung pro Wegschritt ist bei der linearen Kennlinie 42 bei kleinem Moment sehr groß, wird bei höheren Momenten jedoch klein.

Bei der nicht-linearen, progressiven Kennlinie zeigt die zugeordnete Kennlinie 44 eine relative Drehmomentänderung, die pro Wegschritt über dem gesamten Drehmomenteinstellbereich ΔI nahezu konstant ist.

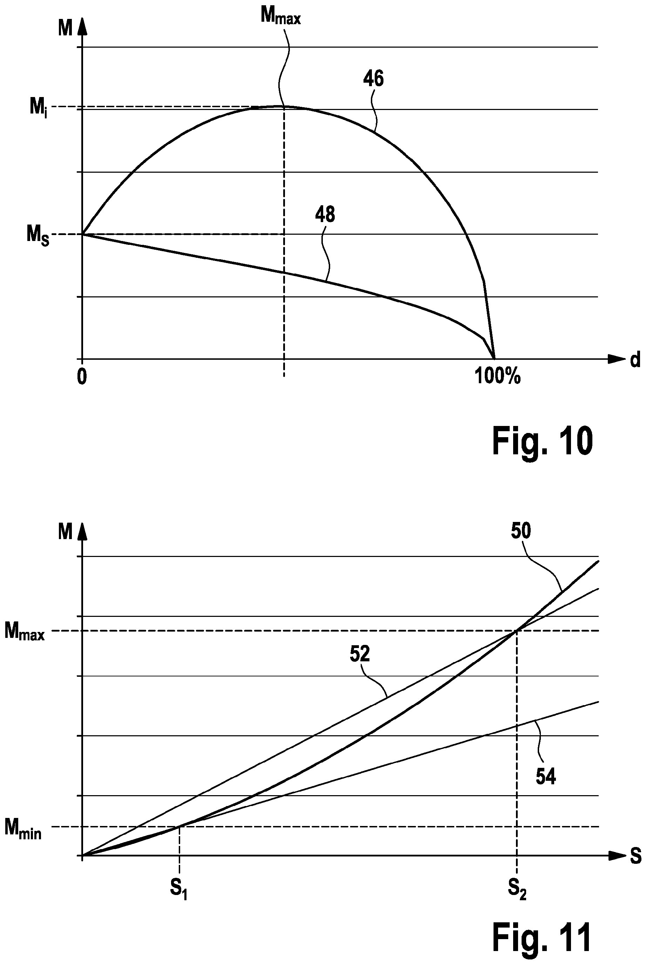

Fig. 10 zeigt das angestrebte Auslöseverhalten der Kupplung mit dem Drehmomentverlauf der Kupplung über dem Öffnungsweg.

Bei Verwendung eines Federelementes mit einer großen Federkonstante und zu kleiner Vorspannkraft ergibt sich das maximale Drehmoment Mₘₐₓ bei einem Öffnungsweg > 0. Wird dagegen ein Federelement mit einer kleinen Federkonstante oder ausreichender Vorspannkraft verwendet, so ergibt sich die Kurve 48, wobei das Auslösemoment Mₛ bei geringstem Öffnungsweg maximal ist und dann bis zum maximalen Öffnungsweg von 100 % kontinuierlich abnimmt. Dieser Fall stellt den Optimalzustand dar. Unabhängig von der gewählten Vorspannkraft ist das höchste übertragene Drehmoment immer genau dann erreicht, wenn sich die Kupplung öffnet. Bei einem Drehmomentverlauf wie in Kennlinie 46 dargestellt, können unterschiedliche Reibwerte der Kupplungselemente 30, 32 und Rollkörper 34 das maximale Drehmoment beeinflussen.

Fig. 11 zeigt schließlich eine Darstellung des Drehmomentes M über dem Öffnungsweg s der Kupplung. Die Kennlinie 50 zeigt den Zusammenhang, der sich ergibt, wenn ein erfindungsgemäßes Federelement mit progressiv zunehmender Kraft-Weg-Kennlinie verwendet wird. Das minimale Drehmoment Mₘᵢₙ, das sich bei dem Federweg s₁ ergibt, steigt annähernd proportional bis zum maximalen Drehmoment Mₘₐₓ an, das sich bei maximalem Federweg s₂ ergibt. Bei Verwendung eines Federelementes mit einer linearen Federkonstante mit steiler Kennlinie würde sich dagegen die Kurve 52 ergeben. Bei Verwendung eines Federelementes mit linearer Federkennlinie, die entsprechend flacher ist, würde sich bei gleichem minimalen Drehmoment Mₘᵢₙ ein deutlich geringeres maximales Drehmoment Mₘₐₓ beim Federweg s₂ ergeben.

Dagegen würde im Vergleich die Kennlinie 52 mit stärkerer linearer Federrate ein nicht ausreichendes minimales Drehmoment bei s₁ ergeben.

Fig. 12 zeigt eine alternative Ausführung einer drehmomentabhängig auslösbaren Kupplung, die insgesamt mit 24a bezeichnet ist. Anstelle einer Kugel-Rutschkupplung ist diese Kupplung 24a als Reibkupplung mit zwei miteinander zusammenwirkenden tellerförmigen Kupplungselementen 30, 32 ausgebildet.

Das zweite Kupplungselement 32, das die Abtriebswelle 26 antreibt, ist über ein Federelement 40a mit progressiver Federkennlinie gegen das zweite Kupplungselement 30 vorgespannt. Zur Verstellung der Vorspannung dient eine Einstelleinrichtung, die lediglich mit einer in der Axialrichtung verstellbaren Scheibe 27 angedeutet ist, die mittels eines Gewindes am Gehäuse 24 verstellbar ist, wie durch den Doppelpfeil 56 verdeutlicht ist.

## Patentansprüche

1. Drehmomentabhängig auslösbare Kupplung (24, 24a) für ein Handwerkzeug (10), mit einem ersten Kupplungselement (30), das mit einem zweiten Kupplungselement (32) zur Übertragung eines Drehmoments zusammenwirkt, wobei mindestens eines (32) der beiden Kupplungselemente (30, 32) gegenüber dem anderen Kupplungselement (30) beweglich ist und durch ein Federelement (40, 40a, b, c) vorgespannt ist, **dadurch gekennzeichnet, dass** das Federelement (40, 40a, b, c) eine Schraubenfeder mit einer nicht-linearen, progressiven Kraft-Weg-Kennlinie ist, bei welcher der Windungsdurchmesser über die Länge und/oder der Drahtdurchmesser über die Länge und/oder die Windungssteigung über die Länge variiert ist, und dass die Kraft-Weg- Kennlinie derartig gestaltet ist, dass über einem gesamten Drehmomenteinstellungsbereich ΔI die relative Drehmomentänderung ΔM pro Wegschritt nahezu konstant ist.

2. Kupplung nach Anspruch 1, **dadurch gekennzeichnet, dass** das Federelement (40, 40a, b, c) eine rotationssymmetrische Druckfeder mit variabler Steigung und/oder variablem Windungsdurchmesser ist.

3. Kupplung nach Anspruch 1 oder 2, **dadurch gekennzeichnet, dass** die Kupplung (24a) als Reibkupplung, insbesondere als Scheibenkupplung oder Kegelkupplung, ausgebildet ist.

4. Kupplung nach Anspruch 1 oder 2, **dadurch gekennzeichnet, dass** die Kupplung (24) als Rollkörper-Rutschkupplung ausgebildet ist, bei der die beiden Kupplungselemente (30, 32) mittels mindestens eines Rollkörpers (34) miteinander gekoppelt sind, der mit mindestens einer Führungskurve (35, 37) an den beiden Kupplungselementen (30, 32) zusammenwirkt.

5. Kupplung nach Anspruch 4, **dadurch gekennzeichnet, dass** der mindestens eine Rollkörper (34) als Kugel oder Rolle ausgebildet ist.

6. Kupplung nach Anspruch 4 oder 5, **dadurch gekennzeichnet, dass** die Führungskurve (35, 37) in Umfangsrichtung geschlossen ist und mindestens ein Nockenelement (38) aufweist, das mit mindestens einem Rollkörper (34) zusammenwirkt.

7. Kupplung nach einem der vorhergehenden Ansprüche, **dadurch gekennzeichnet, dass** Mittel (27) zum Einstellen einer auf das Federelement (40a, b, c) wirkenden Vorspannkraft vorgesehen sind.

8. Handwerkzeug (10), insbesondere Elektrohandwerkzeug, insbesondere Schrauber, mit einer Kupplung (24, 24a) gemäß einem der vorhergehenden Ansprüche.

## Claims

1. Torque-dependent releasable coupling (24, 24a) for a hand tool (10), with a first coupling element (30), which cooperates with a second coupling element (32) for transmitting a torque, wherein at least one (32) of the two coupling elements (30, 32) can be moved relative to the other coupling element (30) and is pretensioned by a spring element (40, 40a, b, c), **characterised in that** the spring element (40, 40a, b, c) is a helical spring with a non-linear, progressive force-deflection characteristic, in which the winding diameter is varied over the length and/or the wire diameter is varied over the length and/or the winding pitch is varied over the length and **in that** the force-deflection characteristic is configured such that over a whole torque setting range ΔI the relative torque variation ΔM per path step is virtually constant.

2. Coupling according to claim 1, **characterised in that** the spring element (40, 40a, b, c) is a rotationally symmetrical compression spring with variable pitch and/or variable winding diameter.

3. Coupling according to claim 1 or 2, **characterised in that** the coupling (24a) is designed as a friction clutch, specifically as a disc clutch or cone clutch.

4. Coupling according to claim 1 or 2, **characterised in that** the coupling (24) is designed as a rolling body slip clutch, wherein the two coupling elements (30, 32) are coupled to one another by means of at least one rolling body (34) which cooperates with at least one guiding curve (35, 37) on the two coupling elements (30, 32).

5. Coupling according to claim 4, **characterised in that** the at least one rolling body (34) is designed as a ball or roller.

6. Coupling according to claim 4 or 5, **characterised in that** the guiding curve (35, 37) is closed in circumferential direction and has at least one cam element (38) which cooperates with at least one rolling body (34).

7. Coupling according to any of the preceding claims, **characterised in that** means (27) are provided for adjusting a pretensioning force acting on the spring element (40a, b, c).

8. Hand tool (10), specifically an electric hand tool, in particular a screwdriver, with a coupling (24, 24a) according to any of the preceding claims.

## Revendications

1. Couplage déclenchable en fonction d'un couple de rotation (24, 24a) pour un outil manuel (10), comprenant un premier élément de couplage (30) qui coopère avec un second élément de couplage (32) pour transmettre un couple de rotation, dans lequel au moins l'un (32) des deux éléments de couplage (30, 32) est mobile par rapport à l'autre élément de couplage (30) et est soumis à une tension préalable par un élément de ressort (40, 40a, b, c), **caractérisé en ce que** l'élément de ressort (40, 40a, b, c) est un ressort hélicoïdal avec une caractéristique force-trajet non linéaire progressive, dans laquelle le diamètre de bobinage est modulé sur la longueur et/ou le diamètre du fil est modulé sur la longueur et/ou le pas de bobinage est modulé sur la longueur et la caractéristique force-trajet est configurée de sorte que, sur une zone totale de réglage du couple de rotation ΔI, la modification relative ΔM du couple de rotation par incrément de trajet soit presque constante.

2. Couplage selon la revendication 1, **caractérisé en ce que** l'élément de ressort (40, 40a, b, c) est un ressort de compression à symétrie de révolution de pas variable et/ou de diamètre de bobinage variable.

3. Couplage selon la revendication 1 ou 2, **caractérisé en ce que** le couplage (24a) se présente sous la forme d'un couplage à friction, en particulier d'un couplage à disques ou d'un couplage à cônes.

4. Couplage selon la revendication 1 ou 2, **caractérisé en ce que** le couplage (24) se présente sous la forme d'un couplage à friction à corps de roulement dans lequel les deux éléments de couplage (30, 32) sont couplés l'un à l'autre au moyen d'un corps de roulement (34) qui coopère avec au moins une came de guidage (35, 37) sur les deux éléments de couplage (30, 32).

5. Couplage selon la revendication 4, **caractérisé en ce que** le au moins un corps de roulement (34) se présente sous la forme d'un cône ou d'un galet.

6. Couplage selon la revendication 4 ou 5, **caractérisé en ce que** la came de guidage (35, 37) est fermée dans la direction périphérique et présente au moins un élément de came (38) qui coopère avec au moins un corps de roulement (34).

7. Couplage selon l'une quelconque des revendications précédentes, **caractérisé en ce que** des moyens (27) sont prévus pour régler une force de précontrainte agissant sur l'élément de ressort (40a, b, c).

8. Outil manuel (10), en particulier outil manuel électrique, en particulier visseuse, équipé(e) d'un couplage (24, 24a) selon l'une quelconque des revendications précédentes.
